# EUROPÄISCHE PATENTANMELDUNG

(11) **EP 1 650 412 A2**
(43) Veröffentlichungstag der Anmeldung: **26.04.2006**
(21) Anmeldenummer: 05016826.9
(22) Anmeldetag: 03.08.2005
(51) Int. Cl.: F01L 1/34, F01L 1/46

(54) **Öltank mit einem Entlüftungsventil**

(30) Priorität: 04.08.2004 DE 102004038824
(71) Anmelder: hofer powertrain GmbH, 97447 Gerolzhofen (DE)
(72) Erfinder: Hofer, Johann, 97447 Gerolzhofen (DE); Trzmiel, Alfred, 72661 Grafenberg (DE); Palesch, Edwin, 73252 Lenningen (DE)
(74) Vertreter: Jackisch-Kohl, Anna-Katharina

(57) **Zusammenfassung**

Die Vorrichtung hat einen Tank (2) für Öl, mit dem ein Aktuator betrieben wird. Das Öl enthält einen gewissen Luftanteil, der zu einem Aufschäumen des Öles führt. Es kann zu Schwingungsgeräuschen und Schwingungsproblemen führen. Damit das im flüssigen Medium enthaltene Gas zu keiner Beeinträchtigung führt, liegt im Strömungsweg vom Tank (2) zum Aktuator ein Entspannungsraum (3). An ihn ist eine Auslaßleitung (4) für das Gas angeschlossen, das über ein Entlüftungsventil (5) aus dem Entspannungsraum (3) entweichen kann.

## Beschreibung

Die Erfindung betrifft eine Vorrichtung mit mindestens einem Tank nach dem Oberbegriff des Anspruches 1 sowie ein Entlüftungsventil nach dem Oberbegriff des Anspruches 14.

Zum Betreiben von Aktuatoren, beispielsweise von Nockenwellenverstelleinrichtungen bei Kraftfahrzeugen, wird Öl als Medium verwendet, um den Aktuator in der gewünschten Weise einzustellen. Bei herkömmlichen Aktuatoren nimmt man bisher in Kauf, daß ein gewisser Luftanteil von im Öl gelöster oder durch die Ölströmung transportierter Luft vorhanden ist. In den meisten Fällen kann dies toleriert werden, weil die Luft über die ungenügende Dichtwirkung von Bauteilen ohne Dichtringe oder Formdichtungen entweichen kann. Bei rotatorischen Aktuatoren, wie zum Beispiel einem Variator von CVT-Getrieben oder von Nockenwellenverstelleinrichtungen, ist das aufgrund der Abdichtung durch Elastomer- und Formdichtungen ausgeschlossen. Das Öl, das über eine Steuereinheit in den Aktuator transportiert wird, ist sehr stark mit Luftbläschen versetzt. Dies ist darauf zurückzuführen, daß im Motor oder im Getriebe eine kleine Ölmenge bis zu zehnmal pro Minute umgepumpt wird. Hierbei wird das Öl aufgeschäumt. Die Luftanteile können wegen der zu kurzen Beruhigungszeit nicht ausgeschieden werden. Die Luftbläschen sammeln sich im Aktuator an der höchsten Stelle des Systems. Bei der Rotation des Aktuators wird die Luft aufgrund des Masseunterschiedes zwischen Öl und Luft nach innen gedrückt und dort unter dem Systemdruck komprimiert. Durch den Luftanteil im Öl erhält man ein weicheres System, das bei einem CVT-Getriebe oder bei einer Schwenkflügel-Nockenwellenverstelleinrichtung zu Schwingungsgeräuschen und Schwingungsproblemen führen kann.

Der Erfindung liegt die Aufgabe zugrunde, die gattungsgemäße Vorrichtung und das gattungsgemäße Entlüftungsventil so auszubilden, daß das im flüssigen Medium enthaltene Gas zu keiner Beeinträchtigung führt.

Diese Aufgabe wird bei der gattungsgemäßen Vorrichtung erfindungsgemäß mit den kennzeichnenden Merkmalen des Anspruches 1 und beim gattungsgemäßen Entlüftungsventil erfindungsgemäß mit den kennzeichnenden Merkmalen des Anspruches 14 gelöst.

Bei der erfindungsgemäßen Vorrichtung und beim erfindungsgemäßen Entlüftungsventil erfolgt eine gezielte Entlüftung, indem das Gas aus dem flüssigen Medium entweichen kann, das flüssige Medium selbst jedoch weitgehend zurückgehalten wird. Dadurch wird ein stabiles Verhalten des Aktuators erreicht. Das flüssige, das Gas enthaltende Medium wird bei der erfindungsgemäßen Vorrichtung in den Entspannungsraum geleitet. Das eingeschlossene Gas kann durch das Entlüftungsventil entweichen, bis das Verschlußelement des erfindungsgemäßen Entlüftungsventiles die Auslaßleitung bzw. Entlüftungsleitung verschließt.

Das erfindungsgemäße Entlüftungsventil kann an allen hydraulisch arbeitenden rotierenden Aktuatoren eingesetzt werden, die mit einem flüssigen Medium betrieben werden. Vorteilhaft wird das Entlüftungsventil in einem Variator eines CVT-Getriebes oder in einer hydraulisch betätigten Nockenwellenverstelleinrichtung zur Entlüftung eingesetzt. Wird beispielsweise bei einem Variator eines CVT-Getriebes das erfindungsgemäße Entlüftungsventil an dessen innerstem Punkt eingesetzt, kann das im flüssigen Medium vorhanden Gas vollständig nach außen geführt werden. Dadurch wird das hydraulische System steifer und dynamischer. Das Antriebselement, wie ein Riemen oder eine Kette, neigt nicht mehr zum Rutschen. Die Eigenfrequenz des kompletten Systems steigt erheblich an.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: in schematischer Darstellung das Prinzip einer Motorölkreislauf-Entlüftung,
- Fig. 2: in schematischer Darstellung sowie im Schnitt ein erstes Ausführungsbeispiel eines erfindungsgemäßen Entlüftungsventiles,
- Fig. 3: in schematischer Darstellung und im Schnitt ein zweites Ausführungsbeispiel eines erfindungsgemäßen Entlüftungsventils,
- Fig. 4: im Radialschnitt einen Teil eines Nockenwellenverstellers mit erfindungsgemäßen Entlüftungsventilen,
- Fig. 5: einen Axialschnitt durch den Nockenwellenversteller gemäß Fig. 4,
- Fig. 6 und Fig. 7: in Darstellungen entsprechend den Fig. 4 und 5 eine weitere Ausführungsform eines Nockenwellenverstellers mit erfindungsgemäßen Entlüftungsventilen,
- Fig. 8: im Schnitt eine Antriebsvorrichtung eines CVT-Getriebes mit erfindungsgemäßen Entlüftungsventilen,
- Fig. 9: in vergrößerter Darstellung einen Teil der Antriebsvorrichtung gemäß Fig. 8 mit den erfindungsgemäßen Entlüftungsventilen,
- Fig. 10 und Fig. 11: jeweils in vergrößerter Darstellung unterschiedliche Ausführungsformen von Entlüftungsventilen, die in der Antriebsvorrichtung gemäß Fig. 8 untergebracht sind,
- Fig. 12: im Schnitt eine weitere Ausführungsform eines erfindungsgemäßen Entlüftungsventils in Offenstellung,
- Fig. 13: das Entlüftungsventil gemäß Fig. 12 in Schließstellung,
- Fig. 14 und Fig. 15: in Darstellungen entsprechend den Fig. 12 und 13 eine weitere Ausführungsform eines erfindungsgemäßen Entlüftungsventils,
- Fig. 16 und Fig. 17: in Darstellungen entsprechend den Fig. 12 und 13 eine weitere Ausführungsform eines erfindungsgemäßen Entlüftungsventils,
- Fig. 18 und Fig. 19: in Darstellungen entsprechend den Fig. 12 und 13 eine weitere Ausführungsform eines erfindungsgemäßen Entlüftungsventils,
- Fig. 20 und Fig. 21: in Darstellungen entsprechend den Fig. 12 und 13 eine weitere Ausführungsform eines erfindungsgemäßen Entlüftungsventils,
- Fig. 22: im Schnitt einen durch eine Nockenwelle betätigbaren Tassenstößel mit einer weiteren Ausführungsform eines erfindungsgemäßen Entlüftungsventils,
- Fig. 23: in einer Darstellung entsprechend Fig. 22 einen durch eine Nokkenwelle betätigbaren Tassenstößel mit einer weiteren Ausführungsform eines erfindungsgemäßen Entlüftungsventils,
- Fig. 24 bis Fig. 26: in Darstellungen entsprechend Fig. 22 weitere Ausführungsformen von erfindungsgemäßen Entlüftungsventilen, die in Tassenstößel eingebaut sind,
- Fig. 27 bis Fig. 32: jeweils im Schnitt und in vergrößerter Darstellung die Entlüftungsventile gemäß den Fig. 22 bis 26.

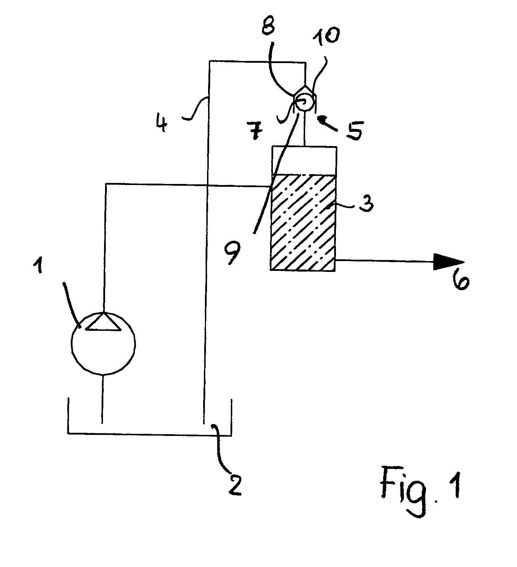

Anhand von Fig. 1 wird eine Motorölkreislauf-Entlüftung beschrieben, die mit einem erfindungsgemäßen Entlüftungsventil ausgestattet ist. Eine Ölpumpe 1 saugt aus einer Motorölwanne 2 Öl an. Hierbei kann auch Luft angesaugt werden, die durch die Ölpumpe 1 in den Ölkreislauf gefördert wird. Dadurch kann es zu Lufteinschlüssen in den mit dem Öl betätigten Einrichtungen, wie Tassenstößel, Kettenspanner und dergleichen, kommen, wodurch die Funktion dieser Elemente beeinträchtigt wird. Um dies zu vermeiden, wird das von der Ölpumpe 1 geförderte Öl in einen Entspannungsraum 3 geleitet. An ihn ist eine Rückführleitung 4 angeschlossen, die in die Motorölwanne 2 mündet und in der ein in Richtung auf die Motorölwanne 2 schließendes Entlüftungsventil 5 sitzt. Das Öl gelangt vom Entspannungsraum 3 zu den entsprechenden Schmierstellen 6 im Motor.

Die im Öl eingeschlossene Luft kann durch das Entlüftungsventil 5 entweichen. Es hat ein Verschlußelement 7, dessen spezifisches Gewicht kleiner ist als das des Öls. Das Verschlußelement 7 ist so ausgebildet, daß zwischen ihm und einer Wandung 8 eines Ventilraumes 9 ein viskositätsabhängiger Spalt 10 gebildet wird. Wenn die im Öl eingeschlossene Luft am Verschlußelement 7 vorbei in die Rückführleitung 4 entwichen ist, wird das Verschlußelement 7 in seine Schließstellung gedrückt, in der es die Rückführleitung 4 verschließt. Sollte wiederum Öl mit eingeschlossener Luft von der Ölpumpe 1 in den Entspannungsraum 3 gefördert werden, wird das Verschlußelement 7 erneut abgehoben, so daß die enthaltene Luft über das geöffnete Entlüftungsventil 5 entweichen kann. Auf diese Weise steht dem Ölkreislauf ein druckstabiler Ölstrom zur Verfügung. Durch eine solche gezielte Entlüftung wird ein stabiles Verhalten des mit dem Öl anzusteuernden Bauteiles erzielt.

Das beschriebene Entlüftungsventil 5 kann an allen hydraulisch arbeitenden Einrichtungen, die mit einem flüssigen Medium betrieben werden, eingesetzt werden. So kann das Entlüftungsventil 5 in einem Variator eines CVT-Getriebes oder in einem hydraulisch betätigten Nockenwellenversteller zur Entlüftung eingesetzt werden.

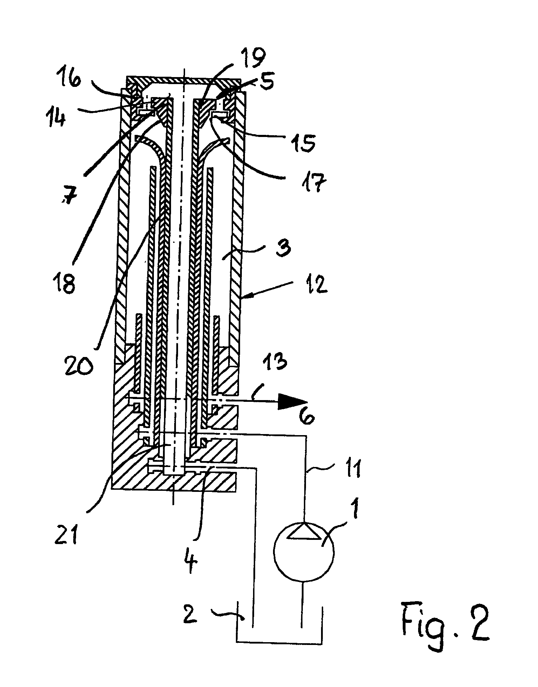

Fig. 2 zeigt ein Ausführungsbeispiel, bei dem die Ölpumpe 1 das Öl aus der Motorölwanne 2 über eine Leitung 11 in ein Ölfiltergehäuse 12 fördert. Von hier aus gelangt das gefilterte Öl über eine Leitung 13 zu den Schmierstellen 6 des Motors. Im Ölfiltergehäuse 12 befindet sich der Entspannungsraum 3, der als Ringraum ausgebildet ist. Außenseitig wird der Entspannungsraum 3 von der Wandung des Ölfiltergehäuses 12 begrenzt. An dem in Fig. 2 oberen Ende des Gehäuses 12 befindet sich das Entlüftungsventil 5, das in der anhand von Fig. 1 beschriebenen Weise dafür sorgt, daß im Öl eingeschlossene Luft entweichen kann. Das Entlüftungsventil 5 hat ein kegelförmiges Verschlußelement 7, das in der Schließstellung mit einem radialen Flansch 14 auf einem Ring 15 aufliegt, der mit seinem äußeren Rand über einen Haltering 16 gehalten ist. Durch eine zentrale Öffnung 17 des Ringes 15 ragt ein konisch sich verjüngender Teil 18 des Verschlußelementes 7.

Das Verschlußelement 7 hat eine zentrale Durchgangsöffnung 19, in die ein Rohr 20 ragt, auf dem das Verschlußelement 7 befestigt ist. Es endet in Höhe der Leitung 13 und steht mit einem zentralen Raum 21 in Verbindung, in den die Rückführleitung 4 zur Ölwanne 2 mündet.

Bei dem beschriebenen Ausführungsbeispiel wird das Verschlußelement 7, wenn das geförderte Öl eingeschlossene Luft enthält, vom Öffnungsrand abgehoben, so daß die im Öl enthaltene Luft entweichen kann. Sie strömt über das Rohr 20 nach unten in den Raum 21, von dem aus die entwichene Luft über die Rückführleitung 4 zurückströmen kann. Sobald die Luft aus dem Öl entwichen ist, fällt das Verschlußelement 7 aufgrund des Eigengewichtes in seine in Fig. 2 dargestellte Schließstellung zurück, in der es den Durchgang durch den Ring 15 sperrt.

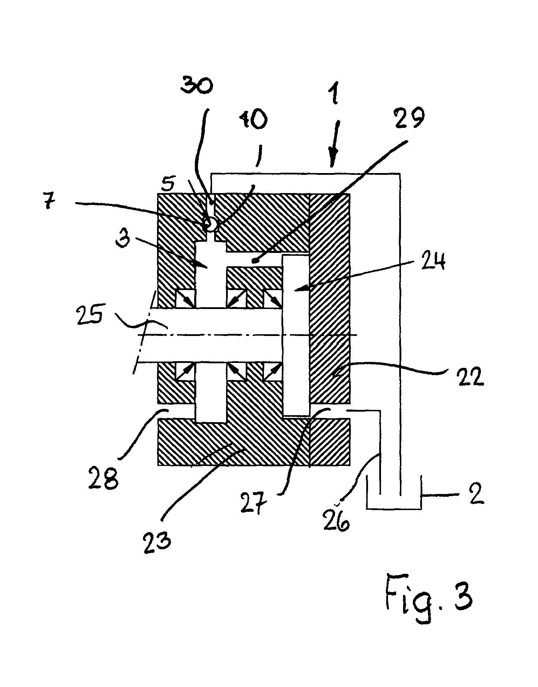

Fig. 3 zeigt ein weiteres Ausführungsbeispiel, bei dem der Entspannungsraum 3 in der Ölpumpe selbst untergebracht ist. Sie ist beispielhaft als Zahnradpumpe ausgebildet. Die Ölpumpe 1 hat einen Deckel 22, mit dem ein Pumpengehäuse 23 geschlossen wird. Im Gehäuse 23 ist ein Pumpenradsatz 24 untergebracht, der in bekannter Weise ausgebildet ist. In das Gehäuse 23 ragt eine Pumpenwelle 25, die innerhalb des Pumpengehäuses 23 abgedichtet ist.

Das Öl wird von der Wanne 2 über eine Saugleitung 26 von der Pumpe 1 angesaugt. Die Saugleitung 26 schließt an eine im Deckel 22 vorgesehene Durchgangsöffnung 27 an. Das Gehäuse 23 ist dem Deckel 22 gegenüberliegend mit einer weiteren Durchgangsöffnung 28 versehen, über die das Öl von der Pumpe 1 zu den Schmierstellen 6 gefördert wird. Der den Pumpenradsatz 24 enthaltende Teil der Pumpe 1 ist mit dem Entspannungsraum 3 über wenigstens einen Zwischenraum 29 strömungsverbunden. In den Entspannungsraum 3 mündet wenigstens eine Ventilbohrung 30, in der das Entlüftungsventil 5 sitzt. Es hat entsprechend der Ausführungsform gemäß Fig. 1 das kugelförmige Ventilelement 7, das mit der umgebenden Wandung der Ventilbohrung 30 einen viskositätsabhängigen Spalt 10 bildet. Das Entlüftungsventil 5 arbeitet in gleicher Weise wie beim Ausführungsbeispiel nach Fig. 1. Im Unterschied zu diesem Ausführungsbeispiel befindet sich der Entspannungsraum 3 innerhalb des Pumpengehäuses 23, ist somit in die Ölpumpe 1 integriert. Wie schon beim Ausführungsbeispiel nach Fig. 1 wird durch den viskositätsabhängigen radialen Spalt 10 erreicht, daß das aus dem Öl frei werdende gasförmige Medium durch den Spalt zwischen dem kugelförmigen Verschlußelement 7 und der Ventilbohrung 30 entweichen kann. Der viskositätsabhängige Spalt 10 wird dadurch gebildet, daß die Rauhtiefen, die bei der mechanischen Bearbeitung der Ventilbohrung 30 entstehen, nicht geglättet werden. Dadurch kann die eingeschlossene Luft über diese Rauhtiefen entweichen. Der Spalt 10 zwischen dem kugelförmigen Verschlußelement 7 und der Wandung der Ventilbohrung 30 ist so berechnet, daß die Luft das Verschlußelement 7 ungehindert passieren kann, daß das Öl aber das Verschlußelement 7 in seinen Dichtsitz preßt. Dadurch sind über die Rauhtiefen nur noch geringste Leckagen möglich, die in der Praxis keine Rolle spielen.

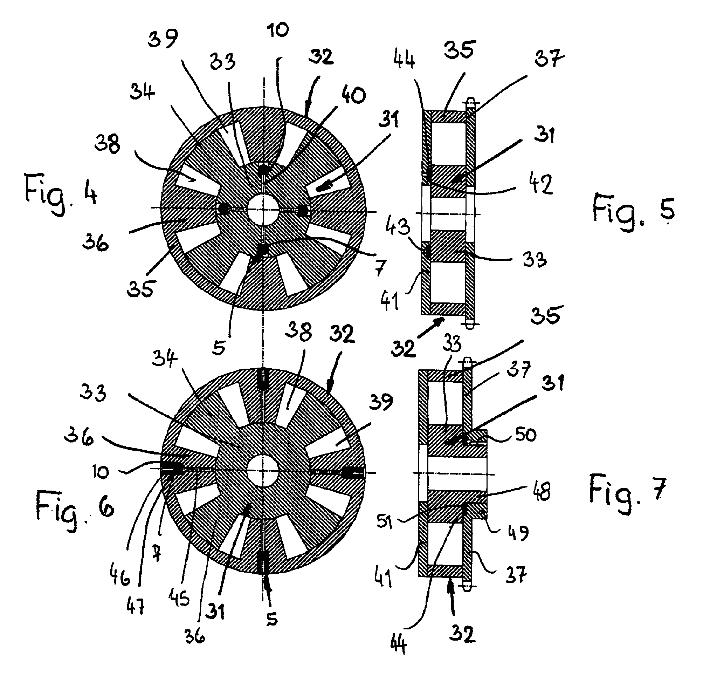

Die Fig. 4 bis 7 zeigen einen Teil einer Nockenwellenverstelleinrichtung eines Kraftfahrzeuges. Die Verstelleinrichtung hat einen Rotor 31, der in einem Stator 32 begrenzt drehbar angeordnet ist. Der Rotor 31 sitzt drehfest auf einer (nicht dargestellten) Nockenwelle und hat einen zylindrischen Grundkörper 33, von dem radial Flügel 34 abstehen. Sie sind über den Umfang des Grundkörpers 33 gleichmäßig verteilt angeordnet.

Der Stator 32 hat einen zylindrischen Mantel 35, von dem radial nach innen Flügel 36 abstehen. Der Stator 32 ist mit einem Antriebsrad 37, vorzugsweise einem Kettenrad, versehen, über das eine Kette geführt ist, über die der Stator 32 mit der Kurbelwelle des Motors antriebsverbunden ist. Die Rotorflügel 34 greifen zwischen benachbarte Statorflügel 36 ein. Zwischen den Statorflügeln 36 und dem Rotorflügel 34 werden Druckräume 38, 39 gebildet, in die in bekannter Weise das Druckmedium, vorzugsweise Öl, eingebracht wird. Der Rotor 31 kann gegenüber dem Stator 32 verdreht werden, indem das Druckmedium in den entsprechenden Druckraum 38 oder 39 unter Druck eingebracht wird. Das Druckmedium beaufschlagt die Rotorflügel 34 an der entsprechenden Seite, wodurch der Rotor 31 gegenüber dem Stator 32 verdreht wird. Der jeweils andere Druckraum ist bei dieser Verstellbewegung entlastet. Der Rotor 31 kann gegenüber dem Stator 32 maximal so weit gedreht werden, bis die Rotorflügel 34 an den Statorflügeln 36 zur Anlage kommen.

Beim Ausführungsbeispiel nach den Fig. 4 und 5 befinden sich die Entlüftungsventile 5, die entsprechend der Ausführungsform gemäß den Fig. 1 bzw. 3 ausgebildet sind. Sie haben die kugelförmigen Verschlußelemente 7, die in den Rotorgrundkörper 33 radial durchsetzenden Bohrungen 40 liegen. Im Bereich der Verschlußelemente 7 sind diese Bohrungen 40 erweitert. Zwischen der Wandung dieser Bohrungen 40 und den Verschlußelementen 7 ist jeweils der viskositätsabhängige Spalt 10 vorgesehen, über den in der beschriebenen Weise die im Öl enthaltene Luft entweichen kann. Der Spalt 10 wird wiederum durch die bei der Bearbeitung der Bohrung entstehenden Rauhtiefen gebildet. Die Radialbohrungen 40 befinden sich im Bereich zwischen benachbarten Rotorflügeln 34, vorzugsweise mittig zwischen benachbarten Rotorflügeln.

Wie Fig. 5 zeigt, wird der Mantel 35 an der dem Antriebsrad 37 gegenüberliegenden Seite durch einen Deckel 41 geschlossen. An ihm liegt der Rotorgrundkörper 33 an. Der Deckel 41 weist eine koaxial zur Achse des Stators 32 liegende Vertiefung 42 auf, in die in gleichmäßigen Abständen den Dekkel 41 durchsetzende Axialbohrungen 43 münden. In die flache Vertiefung 42 ist ein Metallband 44 als Verschlußelement eingelegt. Es erstreckt sich über den Umfang der Vertiefung 42 und liegt an der benachbarten Stirnfläche des Rotorgrundkörpers 33 an. Das Metallband 44 verschließt die radial außen liegenden erweiterten Bereiche der Radialbohrungen 40 im Rotorgrundkörper 33. Die Anlagefläche an der Stirnseite des Rotorgrundkörpers 33 weist Rauhtiefen auf, die bei der mechanischen Bearbeitung des Rotorgrundkörpers entstehen. Über diese Rauhtiefen kann die im Öl enthaltene Luft entweichen. Das höherviskose Öl kann anschließend nicht mehr durch die Rauhtiefen in nennenswertem Umfange entweichen, so daß die auftretenden Leckagen nur noch sehr gering sind.

Die Nockenwellenverstelleinrichtung gemäß den Fig. 6 und 7 hat die kugelförmigen Verschlußelemente 7, die im Unterschied zum vorigen Ausführungsbeispiel in Radialbohrungen 45 in den Statorflügeln 36 vorgesehen sind. Sie durchsetzen die Statorflügel 36 radial und im Ausführungsbeispiel in halber Breite. Das kugelförmige Verschlußelement 7 liegt im radial außen befindlichen, erweiterten Teil der Radialbohrungen 45. Zwischen dem Verschlußelement 7 und der Wandung dieses erweiterten Bohrungsbereiches wird der viskositätsabhängige Spalt 10 gebildet. Durch ihn kann das im Öl befindliche gasförmige Medium (Luft) radial nach außen entweichen. In die erweiterten Bohrungsbereiche ist radial außen jeweils eine Hülse 46 eingesetzt, die eine zentrale Bohrung aufweist und an deren radialen inneren Ende das Verschlußelement 7 in der Schließstellung dichtend anliegt. Die Anlagefläche 47 für das Verschlußelement 7 weist wiederum Luftdurchtritte in Form der Rauhtiefen auf, die bei der mechanischen Bearbeitung der Stirnfläche bzw. des Ventilsitzes 47 entstehen. Die im Öl eingefangene Luft kann über die viskositätsabhängigen Spalte 10 und die Rauhtiefen im Ventilsitz 47 radial nach außen entweichen. Wie bei den vorigen Ausführungsformen werden bei der Druckbelastung des höherviskosen Öls die Radialbohrungen 45 so weit verschlossen, daß nur noch geringste Ölleckagen auftreten. Aufgrund der höheren Viskosität kann das Öl nur noch in geringstem Maße über die radialen Spalte 10 und die Rauhtiefen im Ventilsitz 47 nach außen gelangen.

Der Rotor 31 hat an seiner vom Deckel 41 abgewandten Stirnseite einen zylindrischen zentralen Ansatz 48, der von einem axialen Ringflansch 49 des Antriebsrades 37 umgeben ist. Der Ringflansch 49 weist über seinen Umfang verteilt angeordnete axiale Nuten 50 auf, die den Ringflansch 49 axial durchsetzen und in eine flache umlaufende Vertiefung 51 münden. Sie ist am Übergang vom Ringflansch 49 in das Antriebsrad 37 vorgesehen. In der Vertiefung 51 liegt das flache ringförmige Metallband 44, das an der benachbarten Stirnseite des Rotorgrundkörpers 33 anliegt. Die radiale Breite des Metallbandes 44 entspricht der radialen Breite der Vertiefung 51.

Die axialen Nuten 50 werden durch den zylindrischen Ansatz 48 des Rotors 31 radial innen begrenzt. An der Auflageseite des Metallbandes 44 befinden sich wiederum die infolge der Bearbeitung entstehenden Rauhtiefen, über die im Drucköl befindliche Luft über die Nuten 50 entweichen kann. Die Rauhtiefen sind wiederum so gering, daß das höherviskose Öl nur noch in geringstem Maße über das Metallband 44 in die axialen Nuten 50 gelangen kann.

Die Verwendung der Entlüftungsventile 5 bei den Nockenwellenverstelleinrichtungen gemäß den Fig. 4 bis 7 führt zu einer erheblichen Versteifung des Verstellsystems. Die durch die Wechselmomente infolge der hin- und hergehenden Drehung des Rotors 31 relativ zum Stator 32 entstehenden Anregungen führen nur in sehr geringem Maße dazu, daß die Nockenwellenverstelleinrichtung schwenkt. Dadurch wird die Positioniergenauigkeit der Nokkenwellenverstelleinrichtung bezüglich des Öffnungshubes der Einspritzventile erheblich erhöht.

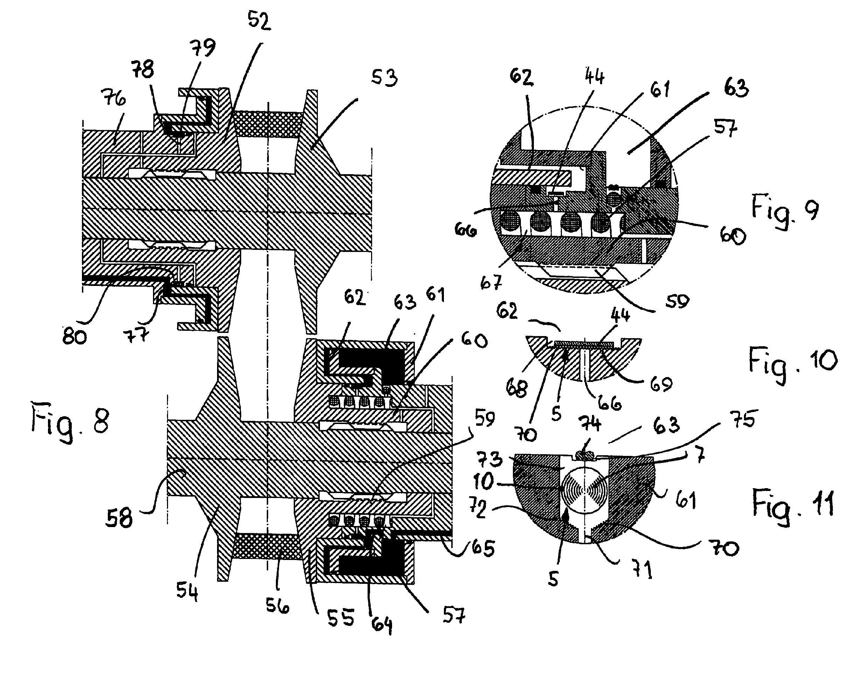

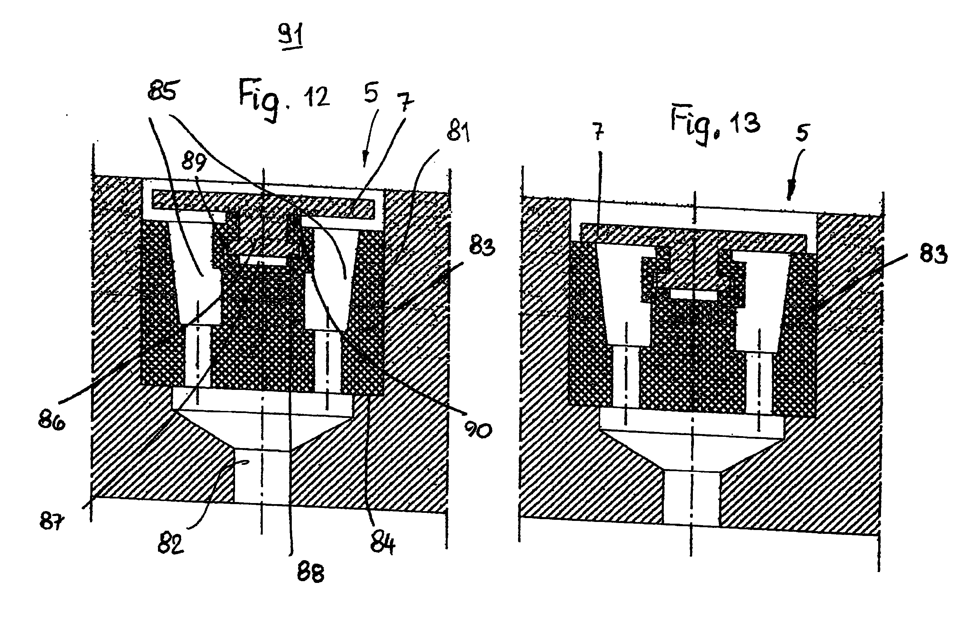

Die Fig. 8 bis 11 zeigen eine Antriebsvorrichtung, bei der ebenfalls die Entlüftungsventile 5 eingesetzt werden. Die Antriebsvorrichtung ist an sich bekannt und wird darum auch nicht näher beschrieben. Sie hat zwei Reibkegelpaare 52, 53 und 54, 55, die durch einen umlaufenden Antriebsriemen 56 miteinander antriebsverbunden sind. Die Reibkegel 52 und 55 sind axial gegenüber den Reibkegeln 53 und 54 verschiebbar. Je nach Abstand zwischen den Reibkegeln 52 und 53 bzw. 54 und 55 greift der Antriebsriemen 56 weiter radial innen oder außen an den Reibkegeln an. Der Reibkegel 55 kann gegen die Kraft eine Druckfeder 57 auf einer Welle 58 verschoben werden, die den Reibkegel 54 drehfest trägt. Der verschiebbare Reibkegel 55 ist über eine Axialverzahnung 59 verdrehfest mit der Welle 58 verbunden. Der Reibkegel 55 ragt mit einem die Welle 58 und die Axialverzahnung 59 umgebenden Ringteil 60 in ein Gehäuse 61. Es hat Ölräume 62 und 63, in die unter Druck stehendes Öl über Bohrungen 64, 65 eingebracht werden kann. In den Ölraum 62 münden über den Umfang verteilt angeordnete Radialbohrungen 66, die einen die Druckfeder 57 aufnehmenden Federraum 67 mit dem Ölraum 62 verbinden. Die Radialbohrungen 67 münden in eine Ringnut 68 an der vom Federraum 67 abgewandten Außenseite des entsprechenden Gehäuseteiles. In die Ringnut 68 ist das ringförmige Metallband 44 als Verschlußelement 7 des Entlüftungsventiles 5 eingelegt. Der Boden 69 der flachen Ringnut 68 weist die Rauhtiefen 70 (Fig. 10) auf, die bei der Bearbeitung des Bodens 69 entstanden und nicht entfernt worden sind. Die axiale Breite des Metallbandes 44 ist kleiner als die entsprechende Breite der Ringnut 68. Das Metallband 44 ist radial federnd ausgebildet. Wenn das im Ölraum 62 befindliche Drucköl Luft enthält, kann es über die Rauhtiefen 70 und die Radialbohrungen 66 entweichen. Ist die eingeschlossene Luft vollständig entwichen, dann wird das Metallband 55 durch das höherviskose Öl radial nach innen belastet, wobei die Rauhtiefen 70 so auf das Öl abgestimmt sind, daß eine Leckage des Öls über die Rauhtiefen 70 nur in geringstem Maße möglich ist.

Der Ölraum 63 ist über wenigstens ein weiteres Entlüftungsventil 5 abgedichtet. Es ist gleich ausgebildet wie beim Ausführungsbeispiel nach den Fig. 1 und 3. Vorzugsweise sind über den Umfang des Gehäuses 61 mehrere Entlüftungsventile 5 vorgesehen. Der Ölraum 63 ist über Radialbohrungen 71 mit dem Federraum 67 verbunden. Die Radialbohrungen 71 sind an ihrem dem Ölraum 63 zugewandten Bereich erweitert ausgebildet und nehmen die kugelförmigen Verschlußelemente 7 auf. Der kegelförmige Ventilsitz am Übergang vom breiteren in den schmaleren Teil der Radialbohrungen 71 ist mit den Rauhtiefen 70 versehen (Fig. 11). Über sie kann in der beschriebenen Weise im Öl eingeschlossene Luft entweichen, auch wenn das Verschlußelement 7 auf dem Ventilsitz 72 sitzt. Außerdem ist zwischen dem Verschlußelement 7 und der Wandung 73 der Radialbohrungen 71 der Spalt 10 vorgesehen. Das Entlüftungsventil 5 arbeitet in gleicher Weise, wie anhand der Fig. 1 und 3 beschrieben worden ist. Die Verschlußelemente 7 sind in den Radialbohrungen 71 durch wenigstens einen Sicherungsring 74 gehalten, der in eine Ringnut 75 eingesetzt ist, die sich an der vom Federraum 67 abgewandten Außenseite des Gehäuseteiles befindet.

Bei geeigneter Auslegung von kugelförmigen Verschlußelementen 7, von viskoseabhängigem Spalt 10 und vom Ventilsitz 70 ist eine Unterscheidung zwischen gasförmigen und flüssigen Medien möglich.

Der Reibkegel 52 ist in einem Gehäuse 76 aufgenommen (Fig. 8), der den Ölraum 77 aufweist. In ihn münden über den Umfang verteilt angeordnete Radialbohrungen 78, die radial außen durch ein radial elastisch nachgiebiges Metallband 79 abgedichtet sind. Es liegt in einer flachen Ringnut 80 des Gehäuseteiles. Der Boden dieser Ringnut 80 ist, wie anhand von Fig. 10 beschrieben worden ist, mit den Rauhtiefen versehen. Ist im Öl, das sich im Ölraum 77 befindet, Luft eingeschlossen, kann sie über die Rauhtiefen in die Radialbohrungen 78 abströmen und nach außen geleitet werden. Das Öl selbst kann infolge seiner höheren Viskosität nur in geringstem Maße über die Rauhtiefen in die Radialbohrungen 78 gelangen. Die Leckage ist dadurch äußerst gering.

Die Fig. 12 bis 23 zeigen unterschiedlichste Ausführungsformen von Entlüftungsventilen.

Die Fig. 12 und 13 zeigen ein Entlüftungsventil 5, das in einem erweiterten Abschnitt 81 einer Bohrung 82 aufgenommen ist. Das Entlüftungsventil hat einen Ventilkörper 83, der in den erweiterten Abschnitt 81 eingesetzt ist und aus elastischem Material, wie Gummi, Silikonkautschuk, Kunststoff und dergleichen besteht. Der Ventilkörper 83 liegt vorteilhaft mit Radialpressung an der Wandung des Bohrungsabschnittes 81 an und ist auf einer Ringschulter 84 abgestützt. Der Ventilkörper 83 ist vorteilhaft zylindrisch ausgebildet und weist über seinen Umfang verteilt angeordnete Durchgangsöffnungen 85 auf.

Mit geringem Abstand von den Durchgangsöffnungen 85 befindet sich das Verschlußelement 7, das als Ringscheibe ausgebildet ist, deren Durchmesser kleiner ist als der Innendurchmesser des Bohrungsabschnittes 81. Das Verschlußelement 7 ist mit einem zentralen Ansatz 86 formschlüssig in einer zentralen vertieften Aufnahme 87 des Ventilkörpers 83 gehalten. Der Formschluß wird durch einen radialen Flansch 88 am freien Ende des Ansatzes 86 gebildet, der in eine seitliche Umfangsnut 89 der Aufnahme 87 eingreift. Der Ansatz 86 wird von einem über die Stirnseite des Ventilkörpers 83 axial überstehenden Hals 90 umgriffen, der an der Unterseite des Verschlußelementes 7 anliegt.

In der Stellung gemäß Fig. 12 ist das Entlüftungsventil 5 geöffnet. Das auf der Druckseite 91 befindliche Druckmedium enthält eingeschlossenes Gas, vorzugsweise Luft, die am Verschlußelement 7 vorbei in die Durchgangsöffnungen 85 und von hier aus über die Bohrungen 82 entweichen kann. Sobald die Luft aus dem Druckmedium entwichen ist, wirkt das flüssige Druckmedium, vorzugsweise Öl, auf das Verschlußelement 7, das aufgrund des höheren spezifischen Gewichts des flüssigen Druckmediums so weit elastisch gebogen wird, bis es an der Stirnseite des Ventilkörpers 83 dichtend anliegt (Fig. 13). Auf diese Weise ist eine Leckage des flüssigen Druckmediums zuverlässig verhindert.

In Fig. 12 ist der Abstand zwischen dem Verschlußelement 7 und der Stirnseite des Ventilkörpers 83 stark vergrößert dargestellt. Die Spaltbreite ist minimal und entspricht etwa der Rauhtiefe 70 der vorhergehenden Ausführungsformen. Dadurch entweicht im wesentlichen nur das im flüssigen Druckmedium enthaltene Gas über das Entlüftungsventil 7 und nicht das flüssige Druckmedium selbst.

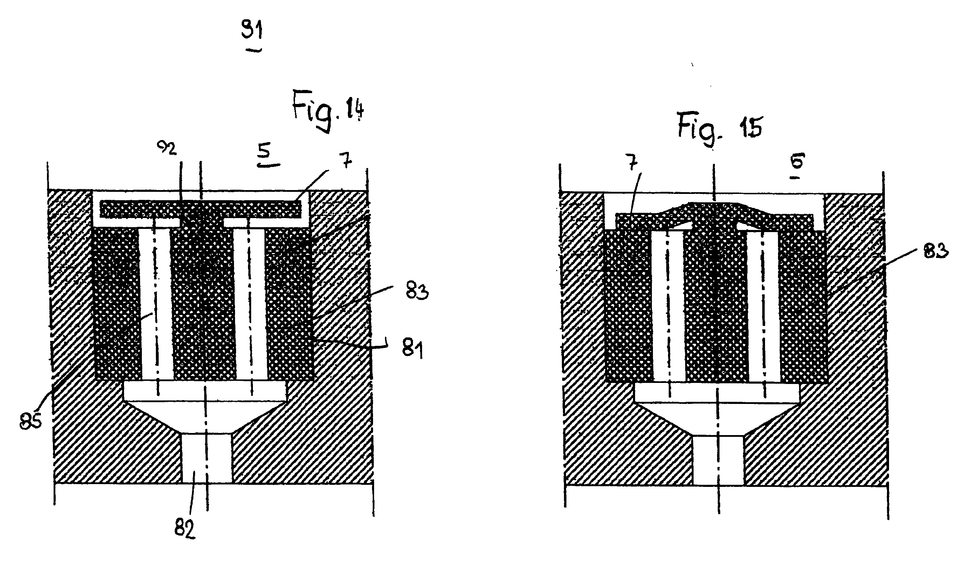

Das Entlüftungsventil 5 gemäß den Fig. 14 und 15 hat den zylindrischen Ventilkörper 83, der entsprechend der vorhergehenden Ausführungsform im erweiterten Abschnitt 81 der Bohrung 82 befestigt ist. Im Unterschied zum vorigen Ausführungsbeispiel ist das scheibenförmige Verschlußelement 7 einstückig mit dem Ventilkörper 83 ausgebildet. Es hat geringen Abstand von der Stirnseite des Ventilkörpers 83 und ist über einen zentralen, flachen Ansatz 92 mit dem Ventilkörper 83 verbunden. Das Verschlußelement 7 ist entsprechend der vorhergehenden Ausführungsform so gestaltet, daß es die axialen Durchgangsöffnungen 85 des Ventilkörpers 83 überdeckt und verschließen kann.

Wie anhand des vorigen Ausführungsbeispieles erläutert worden ist, bleibt das Verschlußelement 7 so lange in seiner Offenstellung gemäß Fig. 14, wie Gas aus dem flüssigen Druckmedium auf der Druckseite 91 noch entweichen kann. Sobald dieses Gas über die Durchgangsöffnungen 85 und die Bohrung 82 entwichen ist, wird das Verschlußelement 7 durch das flüssige Druckmedium selbst belastet, wodurch es so weit elastisch verformt wird (Fig. 15), daß es mit seinem äußeren Rand dichtend auf der Stirnseite des Ventilkörpers 83 aufliegt.

Im übrigen ist diese Ausführungsform gleich ausgebildet wie das Ausführungsbeispiel nach den Fig. 12 und 13.

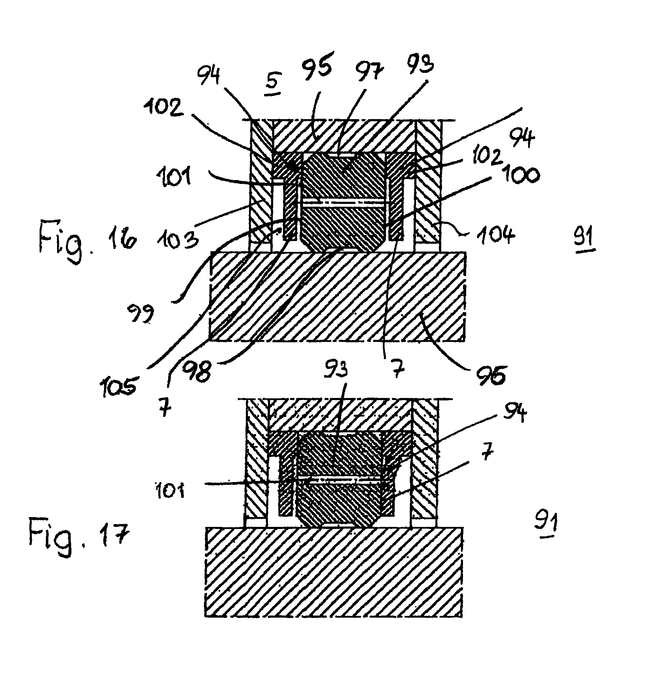

Die Fig. 16 und 17 zeigen eine Ausführung, bei der ein Hydraulik-Dichtelement 93 und zwei Gas-Dichtelemente 94 kombiniert sind. Das Hydraulikdichtelement 93 ist vorteilhaft als Ring ausgebildet, der an einer äußeren Wand 95 sowie an einem Innenteil 96 dichtend anliegt. Das Dichtelement 93 ist im Querschnitt im wesentlichen rechteckförmig ausgebildet. Im Bereich der Anlageflächen an der äußeren Wand 95 und dem Innenteil 96 ist das Dichtelement 93 mit einer mittigen Vertiefung 97, 98 versehen. Das Dichtelement hat zueinander parallele ebene Außenseiten 99, 100, die durch wenigstens eine das Dichtelement 93 durchsetzende Öffnung 101 miteinander verbunden sind.

An der Innenseite der Wand 95 liegen zwei Gasdichtelemente 94 an, die gleich ausgebildet, jedoch spiegelsymmetrisch zueinander angeordnet sind. Die Gasdichtelemente 94 liegen mit einem verdickten Teil 102 an der Innenseite der Wand 95 sowie an der Innenseite von zwei Seitenwänden 103, 104 an, die eben und parallel zueinander angeordnet sind und mit geringem Abstand vom Innenteil 96 enden. Die Seitenwände 103, 104 sowie die Wand 95 begrenzen einen Einbauraum 105 für die Dichtelemente 93, 94. Die Dichtelemente 94 liegen mit dem verdickten Teil 102 sowohl an den Außenseiten 99, 100 des Hydraulikdichtelementes 93 als auch an den einander zugewandten Innenseiten der Seitenwände 103, 104 dichtend an. Von den verdickten Teilen 102 steht in Richtung auf das Innenteil 96 jeweils ein Verschlußelement 7 ab, das plattenförmig ausgebildet ist und mit Abstand vom Innenteil 96 endet. Außerdem haben die Verschlußelemente 7 einen größeren Abstand zu den parallel zu ihnen liegenden Seitenwänden 103, 104 sowie einen kleineren Abstand von den parallel zu ihnen liegenden Außenseiten 99, 100 des Dichtelementes 93.

Das auf der Druckseite 91 befindliche Öl kann zwischen dem Innenteil 96 und der Seitenwand 104 in den Einbauraum 105 strömen. Zwischen dem Verschlußelement 7 und der Außenseite 100 des Dichtelementes 93 kann die im Öl enthaltene Luft zur Durchgangsöffnung 101 gelangen und auf diese Weise aus dem Öl entweichen.

Sobald die im Öl eingefangene Luft vollständig entwichen ist, wird das Verschlußelement 7 durch das Öl belastet und dabei elastisch verformt. Das Verschlußelement 7 legt sich an die Außenseite 100 des Dichtelements 93 an und verschließt dadurch die Durchgangsöffnung 101. Auf diese Weise ist sichergestellt, daß kein Öl aus dem Druckraum 91 entweichen kann.

Der Abstand zwischen dem Verschlußelement 7 und der Außenseite 100 des Dichtelementes 93 ist nur gering und entspricht etwa der Rauhtiefe entsprechend den Ausführungsformen nach den Fig. 1 bis 11. Da das Entlüftungsventil 5 mit den Dichtelementen 93 und 94 symmetrisch aufgebaut ist, kann das Entlüftungsventil auch dann verwendet werden, wenn sich die Druckseite auf der in den Fig. 16 und 17 gegenüberliegenden Seite befindet. In diesem Falle erfolgt der Entlüftungsvorgang zwischen dem Verschlußelement 7 und der Außenseite 99 des Dichtelementes 93. Über die Durchgangsöffnung 101 kann die Luft zur gewünschten Seite hin entweichen. Das jeweils gegenüberliegende Verschlußelement 7 wird nicht in Richtung auf seine Schließstellung belastet, so daß die entwichene Luft auf der druckfreien Seite entweichen kann.

Die Dichtelemente 93, 94 bestehen aus geeigneten Dichtmaterialien, wie beispielsweise aus Gummi, Silikonkautschuk, Kunststoff und dergleichen. Der Einbauraum 105 kann beispielsweise eine Bohrung, aber auch ein umlaufender Raum sein. Im letzten Fall sind die Dichtelemente 93, 94 ringförmig ausgebildet.

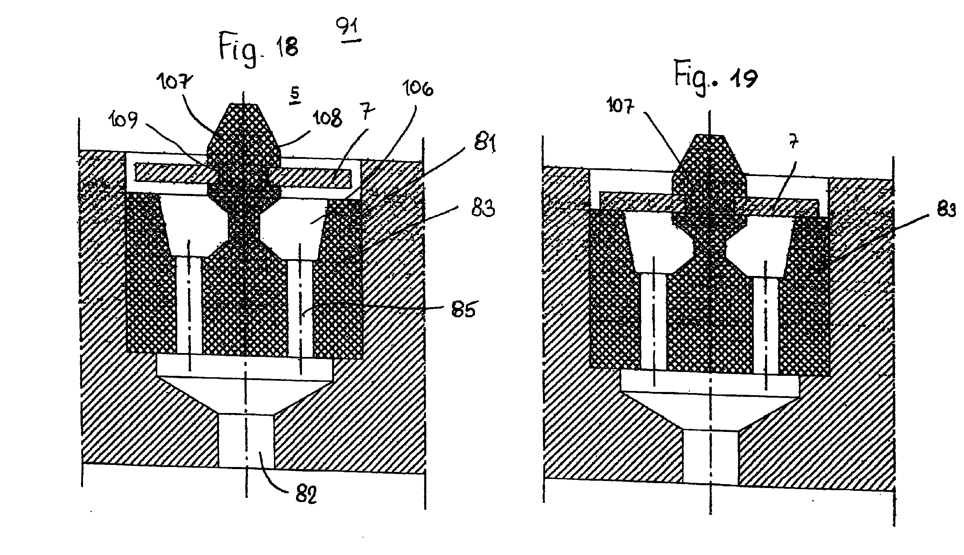

Die Fig. 18 und 19 zeigen ein Entlüftungsventil 5, das ähnlich ausgebildet ist wie das Ausführungsbeispiel gemäß den Fig. 12 und 13. Das Entlüftungsventil 5 hat den Ventilkörper 83, der in den erweiterten Bohrungsabschnitt 81 eingesetzt ist. Der Ventilkörper 83 hat die axial ihn durchsetzenden Durchgangsöffnungen 85, die entsprechend der Ausführungsform gemäß den Fig. 14 und 15 konstanten Durchmesser haben und über den Umfang des Ventilkörpers 83 vorzugsweise gleichmäßig verteilt angeordnet sind. Die Durchgangsöffnungen 85 münden an ihrem dem scheibenförmigen Verschlußelement zugewandten Ende in eine konisch nach außen sich erweiternden Vertiefung 106.

Der Ventilkörper 83 weist zentral einen etwa pilzförmigen Vorsprung 107 auf, der mit einer umlaufenden Nut 108 versehen ist, in die das scheibenförmige Verschlußelement 7 mit dem Rand seiner zentralen Öffnung 109 eingreift. In der in Fig. 18 dargestellten geöffneten Stellung liegt das Verschlußelement 7 mit Abstand zur benachbarten Stirnseite des Ventilkörpers 83. Wenn das im Druckraum 91 befindliche Druckmedium, vorzugsweise Öl, Gas, vorzugsweise Luft, enthält, kann dieses, wie anhand der Fig. 12 bis 15 erläutert, am Verschlußelement 7 vorbei über die Vertiefung 106 in die Durchgangsöffnungen 85 gelangen und somit entweichen. Wie bei den Ausführungsformen nach den Fig. 12 bis 15 liegt die gegenüberliegende Stirnseite des Ventilkörpers 83 mit Abstand zum verengten Teil der Bohrung 82, so daß das Gas einwandfrei entweichen kann. Nach dem Durchgang durch die Öffnungen 85 gelangt das entwichene Gas in ein ausreichend großes Bohrungsvolumen, wo es in die engen Bereiche der Bohrung 82 gelangt. Sobald das Gas vollständig entwichen ist, drückt das flüssige Medium auf das Verschlußelement 7, das im Unterschied zu den Ausführungsformen gemäß den Fig. 12 bis 15 aus starrem, nicht elastisch verformbarem Material besteht. Dafür wird der Vorsprung 107 des Ventilkörpers 83 so weit elastisch verformt, bis das Verschlußelement 7 dichtend auf der Stirnseite des Ventilkörpers 83 aufliegt. Dann ist ein Durchtritt des flüssigen Druckmediums nicht mehr möglich.

In der Offenstellung (Fig. 18) entspricht der Abstand des Verschlußelementes 7 von der benachbarten Stirnseite des Ventilkörpers 83 etwa der Rauhtiefe entsprechend den Ausführungsformen nach den Fig. 1 bis 11. Dadurch ist gewährleistet, daß in der Offenstellung des Entlüftungsventiles 5 im wesentlichen nur das Gas, nicht jedoch das flüssige Medium entweichen kann.

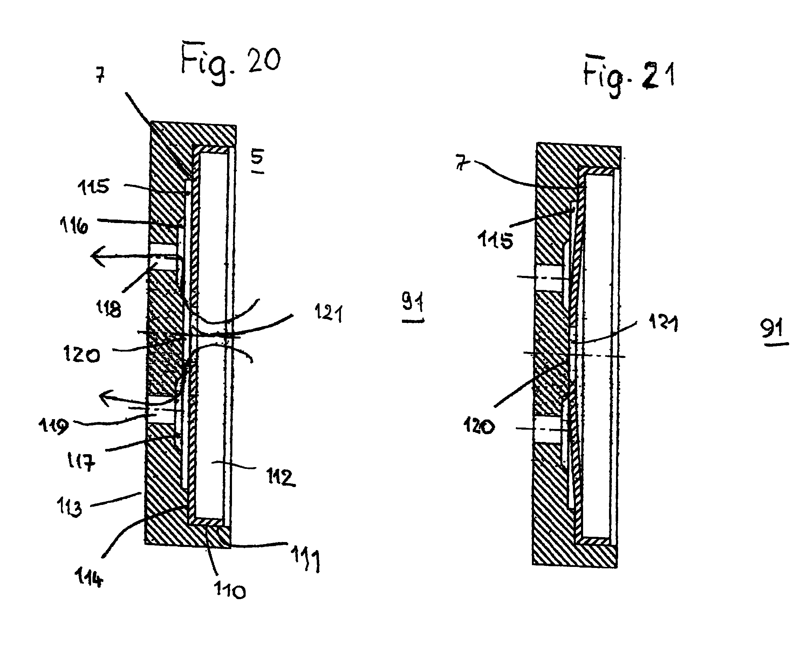

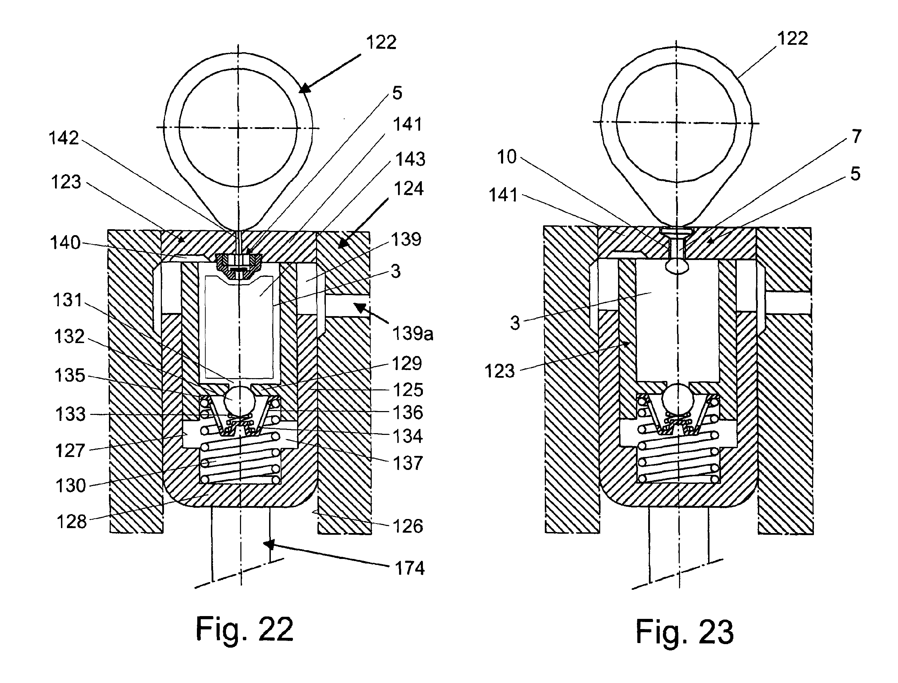

Die Fig. 20 und 21 zeigen ein Entlüftungsventil 5, dessen Verschlußelement 7 als Membran ausgebildet ist. Das Verschlußelement 7 hat einen umlaufenden zylindrischen Rand 110, der dichtend an der Innenseite einer Seitenwand 111 einer Vertiefung 112 in einem Bauteil 113 anliegt. Im Boden 114 der Vertiefung 112 befindet sich zentral eine flache Vertiefung 115, in die im Ausführungsbeispiel zwei kleinere flache Vertiefungen 116, 117 münden. In den Boden dieser Vertiefungen 116, 117 mündet jeweils eine Öffnung 118, 119, die sich bis zur Außenseite des Bauteiles 113 erstrecken.

Das membranförmige Verschlußelement 7 liegt lediglich mit seinem äußeren Rand auf dem Boden 114 der Vertiefung 112 auf. Im radial inneren Bereich hat das Verschlußelement 7 Abstand vom Boden 120 der Vertiefung 115 (Fig. 20). Wenn das im Druckraum 91 befindliche flüssige Druckmedium, vorzugsweise Öl, ein Gas, vorzugsweise Luft, enthält, kann das Gas über eine zentrale Öffnung 121 im Verschlußelement 7 in die Vertiefung 115 gelangen. Von hier aus strömt das Gas in die Vertiefungen 116, 117 und über die Öffnungen 118, 119 aus dem Bauteil 113 nach außen. Der Strömungsverlauf der entweichenden Luft ist in Fig. 20 durch Strömungspfeile gekennzeichnet. Sobald das Gas vollständig aus dem flüssigen Druckmedium entwichen ist, wird das Verschlußelement 7 im zentralen Bereich so weit elastisch verformt, daß es mit seinem die Öffnung 121 aufweisenden Bereich dichtend am Boden 120 der Vertiefung 115 anliegt (Fig. 21). Dann kann das höherviskose flüssige Druckmedium nicht aus dem Druckraum 91 nach außen entweichen.

In der geöffneten Stellung (Fig. 20) ist der Abstand, den das Verschlußelement 7 im Bereich der zentralen Öffnung 121 vom Boden 120 der Vertiefung 115 hat, nur so groß, daß er etwa der Rauhtiefe der Ausführungsformen gemäß den Fig. 1 bis 11 entspricht. Dadurch ist gewährleistet, daß in Offenstellung des Entlüftungsventils 5 nur das Gas, nicht jedoch das flüssige Druckmedium entweichen kann.

Das Ausführungsbeispiel nach den Fig. 20 und 21 zeichnet sich durch eine sehr einfache Gestaltung und flache Bauweise aus.

Die Fig. 22 bis 32 zeigen Ausführungsbeispiele von Entlüftungsventilen, die bei Nockenwellensteuerungen eingesetzt werden. Fig. 22 zeigt eine Nokkenwelle 122, die auf einen Tassenstößel 123 einwirkt, um über einen Ventilschaft 174 ein (nicht dargestelltes) Ventil zu öffnen bzw. zu schließen. Der Tassenstößel 123 ist in einem Gehäuse 124 untergebracht. Der Tassenstö-ßel 123 ist in bekannter Weise in einer Tasse 125 aufgenommen, die relativ zum Tassenstößel 123 verschiebbar ist. Die Tasse 125 liegt dichtend an der Innenwand 126 des Gehäuses 124 an. Der Tassenstößel 123 seinerseits liegt dichtend an der Innenwand 127 der Tasse 125 an. Zwischen einem Boden 128 der Tasse 125 und einem Boden 129 des Tassenstößels 123 befindet sich eine Druckfeder 130, die den Tassenstößel 123 in Richtung auf die Nockenwelle 122 belastet. Im Boden 129 des Tassenstößels 123 befindet sich eine zentrale Ventilöffnung 131, die durch ein Ventilelement 132, vorzugsweise eine Ventilkugel, geschlossen werden kann. Sie steht unter der Kraft einer Druckfeder 133, die sich am Boden eines Käfigs 134 abstützt. Er liegt mit einem radial nach außen gerichteten Flansch 135 an der Unterseite des Bodens 129 des Tassenstößels 123 an. Mit der Druckfeder 130 wird der Flansch 135 in Anlage am Tassenstößelboden 129 gehalten. Der Käfig 134 weist in seinem Mantel Schlitze bzw. Öffnungen 136 auf. Der Käfig 134 befindet sich in einem Hochdruckraum 137, der zwischen dem Boden 128 der Tasse 125 und dem Boden 129 des Tassenstößels 123 vorgesehen ist und in dem auch die Druckfeder 130 liegt.

Das Gehäuse 124 ist mit einer Zulauföffnung 139a für Motoröl versehen. Das Öl gelangt in einen ringförmigen Aufnahmeraum 139, der radial nach innen durch den über die Tasse 125 vorstehenden Teil des Tassenstößels 123 und radial nach außen durch das Gehäuse 124 begrenzt ist. Über wenigstens eine Vertiefung 140 in der Unterseite eines scheibenförmigen Kopfteiles 141 des Tassenstößels 123 ist der Aufnahmeraum 139 mit dem Entspannungsraum 3 strömungsverbunden. Er wird durch einen Hohlraum im Tassenstößel 123 gebildet.

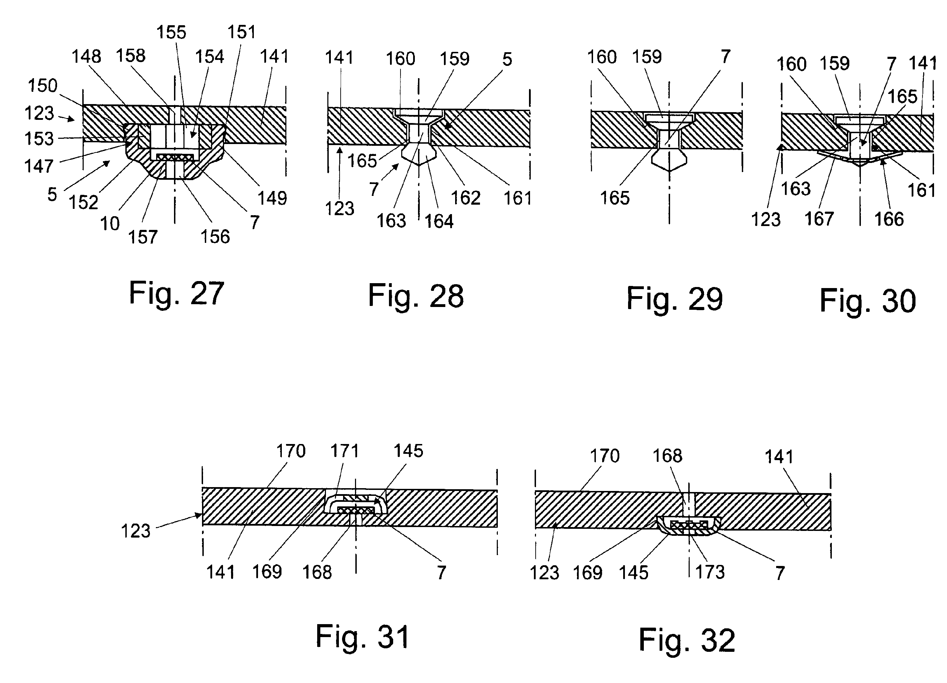

Der Kopfteil 141 des Tassenstößels 123 hat mittig mindestens eine Entlüftungsbohrung 142, die den Entspannungsraum 3 mit der Atmosphäre verbindet. Im Bereich der Entlüftungsbohrung 142 ist an der Unterseite des Kopfteiles 141 das Entlüftungsventil 5 vorgesehen, das anhand von Fig. 27 noch näher erläutert werden wird. Wie bei den vorhergehenden Ausführungsformen sorgt das Entlüftungsventil dafür, daß im Öl enthaltene Luft entweichen kann.

Um das Volumen des Entspannungsraumes 3 möglichst klein zu halten, ist in ihn vorteilhaft ein Füllkörper 143 eingesetzt. Er ist so ausgebildet, daß er den Entlüftungsvorgang nicht behindert.

Fig. 22 zeigt die Situation, in der der Tassenstößel 123 durch die Nockenwelle 122 in seine unterste Stellung verschoben worden ist. Dreht die Nokkenwelle 122 beispielhaft im Uhrzeigersinn weiter um ihre Achse, wird der Tassenstößel 123 durch Federkraft stets in Anlage am Nocken bzw. der Nockenwelle 122 gehalten. Das Entlüftungsventil 5 verhindert, daß bei ablaufender Nocke Luft über die Entlüftungsbohrung 142 eingezogen wird. Läuft die Nocke der Nockenwelle 122 auf den Tassenstößel 123 auf, dann wird in geringem Maße über die Entlüftungsbohrung 123 Öl ausgestoßen, das zur Schmierung der Nockenwelle 122 herangezogen werden kann.

Das Ventil im Hochdruckraum 137 gewährleistet, daß der Entspannungsraum 3 stets mit Druckmedium gefüllt ist. Bei entsprechenden Druckverhältnissen kann über das Ventil Druckmedium aus dem Hochdruckraum 137 in den Entspannungsraum 3 nachströmen.

Bei der Ausführungsform gemäß Fig. 23 ist das Entspannungsventil 5 durch ein etwa pilzförmig ausgebildetes Verschlußelement 7 gebildet, das im Kopfteil 141 des Tassenstößels 123 untergebracht ist. Das Verschlußelement 7 ist entsprechend den vorigen Ausführungsbeispielen so ausgebildet, daß im Druckmedium enthaltene Luft über den Dichtspalt 10 entweichen kann. Dieser Dichtspalt 10 ist nur so groß, daß das Gas, nicht jedoch das Druckmedium aus dem Entspannungsraum 3 entweichen kann.

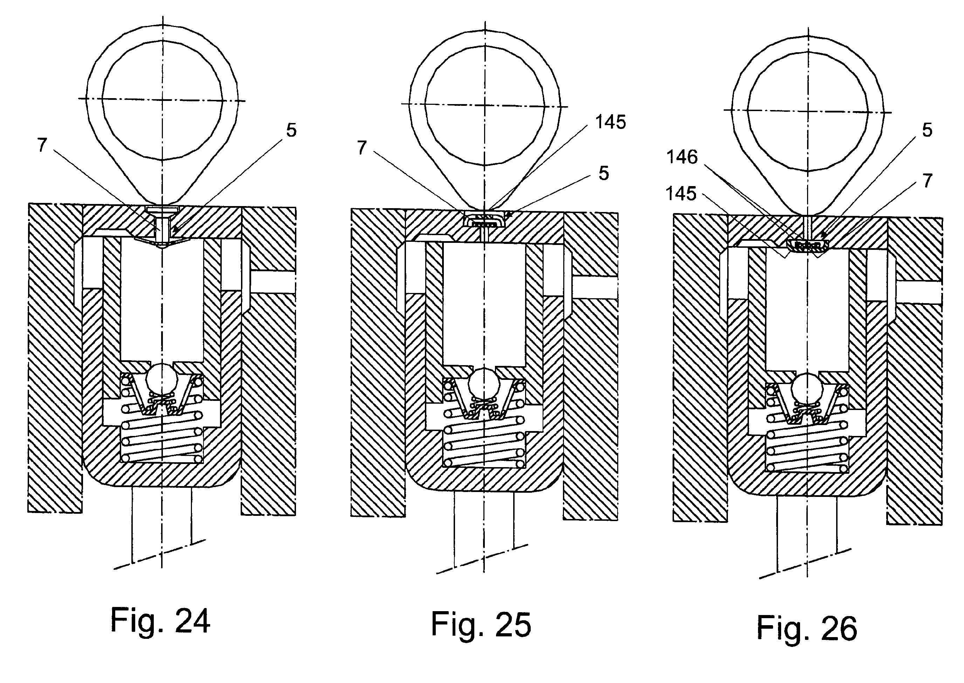

Das Entlüftungsventil 5 der Ausführungsform gemäß Fig. 24 hat das Verschlußelement 7, das durch ein Federelement 144 in Richtung auf seine Schließstellung belastet wird.

Beim Ausführungsbeispiel nach Fig. 25 hat das Entlüftungsventil 5 als Verschlußelement 7 eine Dichtplatte, die in einem Käfig 145 liegt.

Bei der Ausführungsform nach Fig. 26 hat das Entlüftungsventil 5 den Käfig 145 mit der Dichtplatte 7, die im Unterschied zum Ausführungsbeispiel nach Fig. 25 an einer Seite mit Abstandsnocken 146 versehen ist.

Anhand der Fig. 27 bis 32 werden die Entlüftungsventile gemäß den Fig. 22 bis 26 im einzelnen beschrieben.

Das Entlüftungsventil 5 gemäß Fig. 27 hat ein Gehäuse 147, das in eine Vertiefung 148 in der Unterseite des Kopfteiles 141 des Tassenstößels 123 eingeclipst ist. Das Gehäuse 147 hat einen Mantel 149, der am freien Ende mit einer radial nach außen ragenden umlaufenden Wulst 150 versehen ist. Mit ihr ist das Gehäuse 147 in eine umlaufende Vertiefung 151 in der Seitenwand der Vertiefung 148 eingeclipst.

An der Innenwand des Mantels 150 befindet sich eine radial nach innen gerichtete Schulterfläche 152, auf der ein Ring 153 eines Anschlagkäfigs 154 aufliegt. Er ist zwischen der Schulterfläche 152 und dem Boden 155 der Vertiefung 148 axial gesichert.

Das Gehäuse 147 erstreckt sich über die Unterseite des Kopfteiles 141 in den Entspannungsraum 3 (Fig. 22). In diesem überstehenden Gehäuseteil befindet sich zentral eine Durchtrittsöffnung 156, die durch das Verschlußelement 7 in Form einer Dichtplatte verschlossen wird. Sie liegt auf einer weiteren, radial nach innen gerichteten Schulterfläche 157 auf, in welche die Durchtrittsöffnung 156 mündet. In den Boden 155 der Vertiefung 148 mündet eine den Kopfteil 141 durchsetzende Spritzbohrung 158, deren Durchflußquerschnitt kleiner ist als der Durchflußquerschnitt der Durchtrittsöffnung 156. Bezogen auf den Anschlagkäfig 154 liegt die Spritzbohrung 158 mittig.

Das im Druckmedium enthaltene Gas kann aus dem Entspannungsraum 3 über den Dichtspalt 10 entweichen. Der Dichtspalt wird durch die bei der Bearbeitung der Schulterfläche 157 entstehende Rauhtiefe gebildet. Das Verschlußelement 7 verhindert, daß bei ablaufender Nocke beim Drehen der Nockenwelle 122 (Fig. 22) Luft in den Entspannungsraum 3 eingezogen wird. Läuft andererseits die Nocke der Nockenwelle 122 auf den Tassenstößel 123 auf und drückt ihn nach unten, hebt das Verschlußelement 7 von der Schulterfläche 157 ab, so daß eine geringe Menge an Öl über die Durchtrittsöffnungen 156, 158 nach außen treten kann. Diese geringe Ölmenge wird vorteilhaft zum Schmieren der Nockenwelle 122 genutzt.

Das Verschlußelement 7 des Entlüftungsventils 5 gemäß den Fig. 23 und 28 hat ein etwa kegelstumpfförmiges Fußstück 159, das in einem entsprechend ausgebildeten Bohrungsabschnitt 160 einer den Kopfteil 141 des Tassenstößels 123 durchsetzenden Bohrung 161 liegt. Der kegelförmige Bohrungsabschnitt 160 geht etwa in halber Dicke des Kopfteiles in einen zylindrischen Bohrungsabschnitt 162 über, der sich bis zur Unterseite des Kopfteiles 141 erstreckt. Das Verschlußelement 7 hat ein zylindrisches Halsstück 163, mit dem es im Bohrungsabschnitt 162 liegt. Das aus der Bohrung 161 in Richtung auf den Entspannungsraum 3 (Fig. 23) vorstehende Ende 164 des Verschlußelementes 7 ist verbreitert ausgebildet. Das Fußstück 159 und das Halsstück 163 des Verschlußelementes 7 haben jeweils einen Durchmesser, der kleiner ist als der jeweilige Durchmesser der Bohrungsabschnitte 160 und 162. Dadurch wird zwischen ihnen ein Ringspalt 165 gebildet, durch den in Offenstellung (Fig. 28) des Verschlußelementes 7 Öl nach außen entweichen kann. Diese Stellung nimmt das Verschlußelement 7 dann ein, wenn die Nocken der Nockenwelle 122 auf den Tassenstößel 141 auflaufen. Läuft die Nocke der Nockenwelle 122 vom Tassenstößel 123 ab, dann wird das Verschlußelement 7 in seine Dichtstellung verschoben (Fig. 29), in welcher das Fußstück 159 des Verschlußelementes 7 am Boden des kegelförmigen Bohrungsabschnittes 160 anliegt und somit den Ringspalt 165 schließt. Dadurch wird verhindert, daß bei ablaufender Nocke Luft in den Entspannungsraum 3 eingezogen wird.

Das Verschlußelement gemäß den Fig. 24 und 30 hat ebenfalls das Fußstück 159 und das Halsstück 163. Im Unterschied zur Ausführungsform nach den Fig. 23, 28 und 29 wird das Verschlußelement 7 durch ein Federelement 166 in Richtung auf seine Schließstellung belastet. Das Federelement 166 ist nach Art einer Tellerfeder ausgebildet, die zentrisch auf dem über die Unterseite des Kopfteiles 141 des Tassenstößels 123 ragenden Ende des Verschlußelementes 7 sitzt und sich mit seinem umlaufenden Rand an der Unterseite des Kopfteiles abstützt. Fig. 30 zeigt die Schließstellung des Verschlußelementes 7, in der das kegelförmige Fußstück 159 am Boden des Bohrungsabschnittes 160 anliegt und den Ringspalt 165 verschließt. Läuft die Nocke der Nockenwelle 122 auf den Tassenstößel 123 auf und drückt ihn nach unten, dann wird das Verschlußelement 7 durch den im Entspannungsraum 3 herrschenden Druck gegen die Kraft des Federelementes 166 verschoben, so daß der Ringspalt 165 geöffnet wird. Dann kann das Öl aus dem Entspannungsraum nach außen treten und beispielsweise die Nockenwelle 122 schmieren. Läuft die Nocke der Nockenwelle 122 vom Tassenstö-ßel 123 ab, dann zieht das Federelement 166 das Verschlußelement 7 in seine Schließstellung, so daß keine Luft von außen angesaugt werden kann. Das Federelement 166 ist mit Durchtrittsöffnungen 167 versehen, so daß das Öl bei auflaufender Nocke und geöffnetem Dichtspalt 165 aus dem Entspannungsraum 3 durch die Bohrung 161 nach außen strömen kann.

Bei der Ausführungsform nach den Fig. 25 und 31 ist der Kopfteil 141 des Tassenstößels 123 mit einer in die Unterseite des Kopfteiles mündenden Bohrung 168 versehen, die in den Boden einer Vertiefung 169 in der Oberseite 170 des Kopfteiles 141 mündet. In die Vertiefung 169 ist der Käfig 145 eingesetzt, der das plattenförmige Verschlußelement 7 übergreift. Der Käfig 145 ist mit Schlitzen 171 versehen, die vorteilhaft über den Umfang des Käfigs vorgesehen sind. Er liegt vertieft und damit geschützt in der Vertiefung 169. In der in Fig. 31 dargestellten Schließstellung verschließt das plattenförmige Dichtelement 7 die Bohrung 168. Dies ist dann der Fall, wenn die Nocke der Nockenwelle 122 vom Tassenstößel 123 abläuft. Dadurch wird wiederum zuverlässig verhindert, daß bei diesem Ablaufvorgang Luft in den Entspannungsraum 3 eingezogen wird. Läuft andererseits die Nocke der Nockenwelle 122 auf den Tassenstößel 123 auf, hebt das Verschlußelement 7 von der Bohrung 168 ab und gibt sie frei. Dadurch kann bei diesem Auflaufvorgang Öl aus dem Entspannungsraum 3 durch die Bohrung 168 ausströmen.

Beim Ausführungsbeispiel gemäß den Fig. 26 und 32 befindet sich die den Käfig 145 aufnehmende Vertiefung 169 in der Unterseite des Kopfteiles 141 des Tassenstößels 123. Die Bohrung 168 mündet in diesem Fall in die Oberseite 170 des Kopfteiles 141.

Das Verschlußelement 7 ist wiederum als Dichtplatte ausgebildet und liegt in der in Fig. 32 dargestellten Dichtstellung auf der Innenseite des Käfigs 145 auf. Das Verschlußelement 7 ist an seiner der Bohrung 168 zugewandten Unterseite mit Abstandsnocken 172 versehen. Die Abstandsnocken 172 liegen an der Rückseite des Verschlußelementes 7 mit Abstand voneinander und dienen dazu, in der Offenstellung des Entlüftungsventils 5 den Durchgang zur Bohrung 168 freizuhalten. Der Käfig 145 ist zentral mit einer Bohrung 173 versehen, die durch das Verschlußelement 7 verschlossen wird. Die in Fig. 32 dargestellte Dichtlage nimmt das Verschlußelement 7 dann ein, wenn die Nocke der Nockenwelle 122 vom Tassenstößel 123 abläuft. Da hierbei der Tassenstößel 123 in Richtung auf die Nockenwelle 122 bewegt wird, wird das Verschlußelement 7 wie bei den zuvor beschriebenen Ausführungsbeispielen fest in seine Dichtlage gedrückt, so daß die durch die Bohrung 168 angesaugte Luft nicht in den Entspannungsraum 3 gelangen kann. Läuft andererseits die Nocke der Nockenwelle 122 auf den Tassenstößel 123 auf und verschiebt ihn in der Darstellung gemäß Fig. 23 nach unten, wird das Verschlußelement 7 durch das unter Druck gesetzte Medium vom Käfig 145 abgehoben, so daß über die Bohrung 173 Öl in den Käfig eintreten kann. Die Abstandsnocken 172, mit denen das Verschlußelement 7 am Boden der Vertiefung 169 anliegt, gewährleisten, daß dieses Öl durch die Bohrung 168 nach außen strömen kann.

Die Rauhtiefe kann bei den beschriebenen Ausführungsbeispielen beispielsweise zwischen etwa R_{z} 4 und etwa R_{z} 25 liegen. Je dünnflüssiger das Druckmedium ist, desto geringer ist die Rauhtiefe zu wählen. Umgekehrt kann die Rauhtiefe größer sein bei dickflüssigeren Druckmedien.

## Patentansprüche

1. Vorrichtung mit mindestens einem Tank für ein flüssiges Medium, vorzugsweise Öl, das zu wenigstens einem Aktuator förderbar ist,
**dadurch gekennzeichnet, daß** im Strömungsweg vom Tank (2) zum Aktuator wenigstens ein Entspannungsraum (3) vorgesehen ist, an den wenigstens eine Auslaßleitung (4, 10, 142, 158, 161, 168) für im flüssigen Medium enthaltenes Gas angeschlossen ist, das über wenigstens ein Entlüftungsventil (5) aus dem Entspannungsraum (3) entweicht.

2. Vorrichtung nach Anspruch 1,
**dadurch gekennzeichnet, daß** der Entspannungsraum (3) zwischen dem Tank (2) und dem Aktuator liegt.

3. Vorrichtung nach Anspruch 1,
**dadurch gekennzeichnet, daß** der Entspannungsraum (3) in einer Pumpe (1) vorgesehen ist.

4. Vorrichtung nach Anspruch 1,
**dadurch gekennzeichnet, daß** der Entspannungsraum (3) in einem Ölfiltergehäuse (12) vorgesehen ist.

5. Vorrichtung nach Anspruch 1,
**dadurch gekennzeichnet, daß** der Entspannungsraum (3) in einem Tassenstößel (123) vorgesehen ist.

6. Vorrichtung nach Anspruch 5,
**dadurch gekennzeichnet, daß** im Entspannungsraum (3) des Tassenstößels (123) mindestens ein Füllstück (143) untergebracht ist.

7. Vorrichtung nach einem der Ansprüche 1 bis 6,
**dadurch gekennzeichnet, daß** die Auslaßleitung (4, 10) in den Tank (2) mündet.

8. Vorrichtung nach einem der Ansprüche 1, 2 oder 7,
**dadurch gekennzeichnet, daß** das Entlüftungsventil (5) in der Auslaßleitung (4) sitzt.

9. Vorrichtung nach einem der Ansprüche 1, 3 oder 7,
**dadurch gekennzeichnet, daß** das Entlüftungsventil (5) in einer Bohrung (30) eines Pumpengehäuses (22) sitzt.

10. Vorrichtung nach einem der Ansprüche 1, 4 oder 7,
**dadurch gekennzeichnet, daß** das Entlüftungsventil (5) im Ölfiltergehäuse (12) sitzt.

11. Vorrichtung nach einem der Ansprüche 1, 5 oder 6,
**dadurch gekennzeichnet, daß** das Entlüftungsventil (5) im Tassenstößel (123) sitzt.

12. Vorrichtung nach einem der Ansprüche 1 bis 11,
**dadurch gekennzeichnet, daß** der Aktuator eine Nockenwellenverstelleinrichtung (31, 32) ist.

13. Vorrichtung nach einem der Ansprüche 1 bis 11,
**dadurch gekennzeichnet, daß** der Aktuator eine Riemenantriebsvorrichtung eines CVT-Getriebes ist.

14. Entlüftungsventil, insbesondere zur Verwendung in einer Vorrichtung nach einem der Ansprüche 1 bis 13, mit einem Verschlußelement, das in einer Schließstellung an einem Ventilsitz anliegt,
**dadurch gekennzeichnet, daß** der Ventilsitz auf das entweichende Gas abgestimmte Undichtigkeiten (70) aufweist, die ein Entweichen des Gases ermöglichen, den Durchtritt des höherviskosen flüssigen Mediums jedoch zumindest weitgehend verhindern.

15. Entlüftungsventil nach Anspruch 14,
**dadurch gekennzeichnet, daß** die Undichtigkeiten (70) durch Rauhtiefen am Ventilsitz gebildet sind.

16. Entlüftungsventil nach Anspruch 14 oder 15,
**dadurch gekennzeichnet, daß** das Verschlußelement (7) eine Kugel ist, die mit Spiel (10) in einer Ventilbohrung (71) sitzt.

17. Entlüftungsventil nach Anspruch 14 oder 15,
**dadurch gekennzeichnet, daß** das Verschlußelement ein federndes Metallband (44, 79) ist.

18. Entlüftungsventil nach Anspruch 17,
**dadurch gekennzeichnet, daß** das Metallband (44, 79) radial federnd ausgebildet ist.

19. Entlüftungsventil nach Anspruch 17 oder 18,
**dadurch gekennzeichnet, daß** das Metallband (44, 79) in einer Vertiefung (42, 51, 68) angeordnet ist, in die mindestens eine Bohrung (43, 50, 66, 78) mündet.

20. Entlüftungsventil nach Anspruch 14,
**dadurch gekennzeichnet, daß** das Verschlußelement (7) scheibenförmig ausgebildet und elastisch verformbar ist.

21. Entlüftungsventil nach Anspruch 20,
**dadurch gekennzeichnet, daß** das Verschlußelement (7) an einem Ventilkörper (83) gehalten ist, der in einem Einbauraum (81) untergebracht ist.

22. Entlüftungsventil nach Anspruch 21,
**dadurch gekennzeichnet, daß** der Ventilkörper (83) von wenigstens einer Öffnung (85) durchsetzt ist.

23. Entlüftungsventil nach einem der Ansprüche 20 bis 22,
**dadurch gekennzeichnet, daß** das Verschlußelement (7) einstückig mit einem Ventilkörper (83) ausgebildet ist.

24. Entlüftungsventil nach Anspruch 14,
**dadurch gekennzeichnet, daß** der Ventilsitz an einem ersten Dichtelement (93) für das flüssige Medium vorgesehen ist.

25. Entlüftungsventil nach Anspruch 24,
**dadurch gekennzeichnet, daß** das erste Dichtelement (93) wenigstens eine Durchgangsöffnung (101) für das entweichende Gas aufweist.

26. Entlüftungsventil nach Anspruch 25,
**dadurch gekennzeichnet, daß** die Durchgangsöffnung (101) durch wenigstens ein zweites Dichtelement (94) verschließbar ist.

27. Entlüftungsventil nach Anspruch 26,
**dadurch gekennzeichnet, daß** das zweite Dichtelement (94) das Verschlußelement (7) aufweist.

28. Entlüftungsventil nach Anspruch 14,
**dadurch gekennzeichnet, daß** das Verschlußelement (7) als elastisch verformbare Membran ausgebildet ist.

29. Entlüftungsventil nach Anspruch 28,
**dadurch gekennzeichnet, daß** das Verschlußelement (7) mit einem umlaufenden zylindrischen Mantel (110) an einer Seitenwand (111) eines Einbauraumes (112) befestigt ist.

30. Entlüftungsventil nach Anspruch 29,
**dadurch gekennzeichnet, daß** im Boden (115) des Einbauraumes (112) mindestens eine Vertiefung (116, 117) vorgesehen ist, in die wenigstens eine Auslaßöffnung (118, 119) mündet.

31. Entlüftungsventil nach Anspruch 30,
**dadurch gekennzeichnet, daß** das Verschlußelement (7) wenigstens eine Durchtrittsöffnung (121) für das Gas aufweist.

32. Entlüftungsventil nach Anspruch 30 oder 31,
**dadurch gekennzeichnet, daß** das Verschlußelement (7) in seiner Offenstellung Abstand von der Vertiefung (116, 117) hat.

33. Entlüftungsventil nach Anspruch 14,
**dadurch gekennzeichnet, daß** das Verschlußelement (7) in einem Gehäuse (147) untergebracht ist, das wenigstens eine Durchtrittsöffnung (156) aufweist.

34. Entlüftungsventil nach Anspruch 33,
**dadurch gekennzeichnet, daß** das Gehäuse (147) formschlüssig im Tassenstößel (123) gehalten ist.

35. Entlüftungsventil nach Anspruch 14,
**dadurch gekennzeichnet, daß** das Verschlußelement (7) in einer Bohrung (161) des Tassenstößels (123) liegt.

36. Entlüftungsventil nach Anspruch 35,
**dadurch gekennzeichnet, daß** das Verschlußelement (7) pilzförmig ausgebildet ist.

37. Entlüftungsventil nach Anspruch 35 oder 36,
**dadurch gekennzeichnet, daß** das Verschlußelement (7) in Richtung auf seine Schließstellung federbelastet ist.

38. Entlüftungsventil nach Anspruch 14,
**dadurch gekennzeichnet, daß** das Verschlußelement (7) in einem Käfig (145) aufgenommen ist.

39. Entlüftungsventil nach Anspruch 38,
**dadurch gekennzeichnet, daß** der Käfig (145) in einer Vertiefung (169) des Tassenstößels (123) untergebracht ist.

40. Entlüftungsventil nach Anspruch 38 oder 39,
**dadurch gekennzeichnet, daß** der Käfig (145) wenigstens einen Durchlaß (171, 173) für das Gas aufweist.

41. Entlüftungsventil, insbesondere nach einem der Ansprüche 1 bis 40,
**dadurch gekennzeichnet, daß** das Entlüftungsventil (5) bei an einem Tassenstößel (123) ablaufender Nocke einer Nockenwelle (122) schließt und bei auflaufender Nocke öffnet.
